# EUROPEAN PATENT APPLICATION

(11) **EP 1 630 205 A1**
(43) Date of publication of application: **01.03.2006**
(21) Application number: 04020026.3
(22) Date of filing: 24.08.2004
(51) Int. Cl.: C09B 55/00, C09B 23/16, G11B 7/24, C09B 69/04, C09B 69/06

(54) **New styrylpyridinium imine based dyes and their use in optical layers for optical data recording**

(71) Applicant: CLARIANT INTERNATIONAL LTD., 4132 Muttenz 1 (CH)
(72) Inventor: Graciet, Jean-Christophe, F-68128 Village-Neuf (FR)

(57) **Abstract**

The present invention relates to new styrylpyridinium-imine based dyes and their use in optical layers for optical data recording, preferably for optical data recording using a laser with a wavelength up to 500 nm.

The invention further relates to a write once read many (WORM) type optical data recording medium capable of recording and reproducing information with radiation of blue laser, which employs a styrylpyridinium-imine based dye in the optical layer.

## Description

The present invention relates to new styrylpyridinium-imine based dyes and their use in optical layers for optical data recording, preferably for optical data recording using a laser with a wavelength up to 500 nm.
The invention further relates to a write once read many (WORM) type optical recording medium capable of recording and reproducing information with radiation of blue laser, which employs a styrylpyridinium-imine based dye in the optical layer.

Recently, organic dyes have attracted considerable attentions in the field of diode-laser optical storage. Commercial recordable compact discs (CD-R) and recordable digital versatile discs (DVD-R) can contain, as recording layer, numerous dyes based on phthalocyanine, hemicyanine, cyanine and metallized azo structures. These dyes are suitable in their respective fields with the laser wavelength criteria. Other general requirements for dye media are strong absorption, high reflectance, high recording sensitivity, low thermal conductivity as well as light and thermal stabilities, durability for storage or non-toxicity.

For industrial application, these dyes have to be suitable for the spin coating process to prepare thin films, i.e. they have to be sufficiently soluble in the organic solvents generally applied in the spin coating process.

WORM (write once read many) type and erasable type optical recording media reproduce information by detecting variations in the reflectivity caused by physical deformation, by alterations of optical characteristics as well as by phase and magnetic properties of a recording layer before and after the recording.

Recordable compact discs (CD-R) are widely known as a WORM type optical recording medium. Recently, digital versatile discs (DVD) with increased information storage capabilities up to 4.7 GBytes have been commercialized.

The DVD-R technology adopts as a light source a red diode laser with a wavelength of 630-670 nm. Thereby the pit size and track interval can be reduced, increasing the information storage capacity by up to 6-8 times compared to CD-R's.

Blu-ray® discs (Blu-ray® disc is a standard developed by Hitachi Ltd., LG Electronics Inc., Matsushita Electric Industrial Co. Ltd., Pioneer Corporation, Royal Philips Electronics, Samsung Electronics Co. Ltd., Sharp Corporation, Sony Corporation, Thomson Multimedia) are going to be the next milestone in optical recording technology. Its new specification increases the data storage up to 27 GBytes per recording layer for a 12 cm diameter disc. By adopting a blue diode laser with a wavelength of 405 nm (GaN or SHG laser diodes), the pit size and track interval can be further reduced, again increasing the storage capacity by an order of magnitude.

The construction of optical data recording media is known in the art. An optical data recording media generally comprises a substrate and a recording layer, the optical layer. Usually discs or wavers of organic polymeric materials are used as substrates. Preferred substrates are polycarbonate (PC) or polymethylmethacrylate (PMMA). The substrate has to provide an even and uniform surface of high optical quality. The optical layer is deposited thereon in a thin and uniform film of high optical quality and defined thickness. Finally, a reflective layer, e.g. aluminium, gold or copper, is deposited upon the optical layer.

Advanced optical data recording media may comprise further layers, such as protective layers, adhesive layers or additional optical layers.

To provide for a thin and uniform film of the optical layer, the material is usually deposited by spin coating, vacuum evaporation, jet coating, rolling coating or soaking. The preferred process in industry is spin coating to form an optical layer of about 70 nm to 250 nm thickness. For the application in the spin coating process, the material of the optical layer has to be highly soluble in organic solvents.

**WO2002086879** (Bayer) and J**P2001250273** (Toshiba) disclose the use of styryl dyes as new dyes in the information layer for optical data carrier.

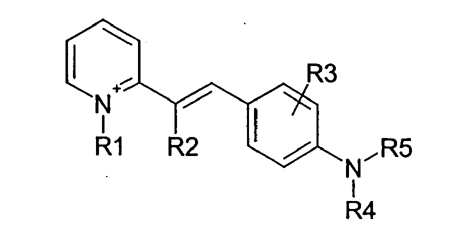

**WO2001070667** (BF Research Institute) discloses the use of such styrylpyridinium dyes for the use as image diagnosis probe.

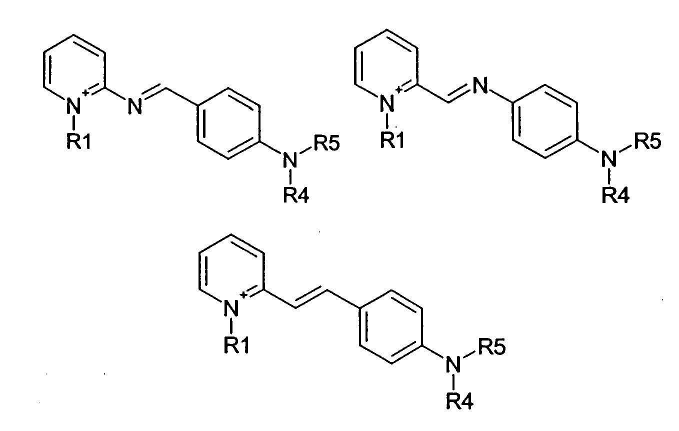

**EP1149575, WO2000012057** and **WO2000010519** (L'Oréal) disclose the use of styrylpyridinium for the use in hair dye compositions.

Jedzejewska et al. (J. Polymer Science, Part A: Polymer Chemistry 2002, 40(10), 1433-1440) discloses the use of styrylpyridinium as photoinitiators of free radical polymerization.

Surprisingly it has been found, that new styrylpyridinium-imine based dyes as described below are useful as dye compounds in optical layers for optical data recording media.

The present invention therefore relates to new styrylpyridinium-imine based dyes and to their use in an optical layer comprising styrylpyridinium-imine based dyes as described below and to the use of said optical layers for optical data recording media.

More particularly, the invention relates to a write once read many (WORM) type optical data recording medium capable of recording and reproducing information with radiation of blue laser of preferably 405 nm, which employs a styrylpyridinium-imine based dye in the optical layer.

The present invention is directed to a dye compound of formula (I) 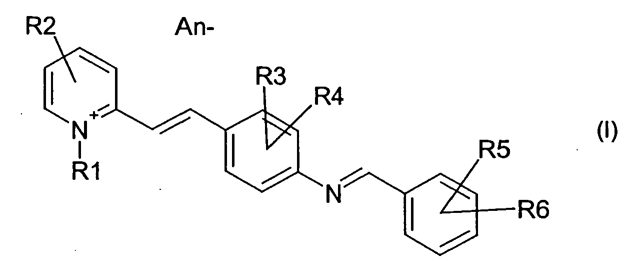 wherein
- R₁: represents C₁₋₈ alkyl wherein the alkyl can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl or C₆₋₁₂ aryl;
or rerpresents CX₃ where X can be chlorine, fluorine, bromine;
- R₂: hydrogen, cyano (-CN), halogen, nitro (NO₂), hydroxy, C₁₋₈ alkoxy (-OR) wherein the alkyl (R) can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl;
C₁₋₈ alkyl, wherein the alkyl can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl or C₆₋₁₂ aryl;
CX₃ where X can be chlorine, fluorine, bromine;
- R₃ to R₆: independently of one another, represent hydrogen or cyano (-CN), halogen, nitro (NO₂), hydroxy, C₁₋₈ alkoxy (-OR) wherein the alkyl (R) can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl;
C₁₋₈ alkyl, wherein the alkyl can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl or C₆₋₁₂ aryl;
CX₃ where X can be chlorine, fluorine, bromine;
- R₅ and R₆: together may also represent a heterocyclic moiety linked by a group selected from dioxyalkyl O-(CH₂)ₙ-O, with n being 1 to 4, or NR₉-CO-NR₁₀ wherein R₉ and R₁₀ are C₁₋₁₂ alkyl;
- An-: represents an anion counter-part selected from inorganic anions such as iodine, fluorine, bromine, perchlorate, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.
- An⁻: can also be an anionic azo metal complex based on cobalt metal.

In a preferred aspect, the present invention is directed to a dye compound of formula (I) wherein
- R₁: represents C₁₋₄ alkyl wherein the alkyl can be unsubstituted or substituted by C₁₋₈ alkyl, hydroxy (-OH), by -NR₇R₈ in which R₇ and R₈ are independently hydrogen, C₁₋₈ alkyl;
or rerpresents CX₃ where X can be chlorine, fluorine, bromine;
- R₂: hydrogen, cyano (-CN), halogen, nitro (NO₂), C₁₋₈ alkyl, wherein the alkyl can be unsubstituted or substituted by C₁₋₈ alkyl, hydroxy (-OH), by-NR₇R₈ in which R₇ and R₈ are independently hydrogen, C₁₋₈ alkyl CX₃ where X can be chlorine, fluorine, bromine;
- R₃ to R₆: independently of one another, represent hydrogen or cyano (-CN), halogen, nitro (NO₂), hydroxy, C₁₋₈ alkoxy (-OR) wherein the alkyl (R) can be unsubstituted or substituted by C₁₋₈ alkyl, hydroxy (-OH), or by-NR₇R₈ in which R₇ and R₈ are independently hydrogen, C₁₋₈ alkyl;
C₁₋₈ alkyl, wherein the alkyl can be unsubstituted or substituted by C₁₋₈ alkyl, hydroxy (-OH), or by -NR₇R₈ in which R₇ and R₈ are independently hydrogen, C₁₋₈ alkyl;
CX₃ where X can be chlorine, fluorine, bromine;
- R₅ and R₆: together may also represent a heterocyclic moiety selected from dioxyalkyl O-(CH₂)ₙ-O, with n being 1 to 2, or NR₉-CO-NR₁₀ wherein R₉ and R₁₀ are C₁₋₆ alkyl;
- An-: represents an anion counter-part selected from inorganic anions such as iodine, perchlorate, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.
- An⁻: can also be an anionic azo metal complex based on cobalt metal.

In a more preferred aspect, the present invention is directed to a dye compound of formula (I) wherein
- R₁: represents C₁₋₄ alkyl wherein the alkyl can be unsubstituted or substituted by C₁₋₄ alkyl;
- R₂: hydrogen, cyano (-CN), halogen, nitro (NO₂), C₁₋₈ alkyl;
- R₃ to R₆: independently of one another, represent hydrogen or cyano (-CN), halogen, nitro (NO₂), hydroxy, C₁₋₄ alkoxy (-OR) wherein the alkyl (R) can be unsubstituted or substituted by C₁₋₄ alkyl, hydroxy (-OH); C₁₋₄ alkyl, wherein the alkyl can be unsubstituted or substituted by C₁₋₈ alkyl, hydroxy (-OH);
CX₃ where X can be chlorine, fluorine, bromine;
- R₅ and R₆: together may also represent a heterocyclic moiety selected from dioxyalkyl O-(CH₂)ₙ-O, with n being 1 to 2, or NR₉-CO-NR₁₀ wherein R₉ and R₁₀ are C₁₋₂ alkyl;
- An-: represents an anion counter-part selected from inorganic anions such as iodine, perchlorate, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.
- An⁻: can also be an anionic azo metal complex based on cobalt metal.

In a most preferred embodiment, the present invention is directed to a dye compound of formula (I) wherein
- R₁: represents methyl;
- R₂: represents hydrogen;
- R₃ and R₄: represent hydrogen;
- R₅ and R₆: together represent a heterocyclic moiety -O-CH₂-O-;
- An⁻: represents an anionic azo cobalt complex of the following formula

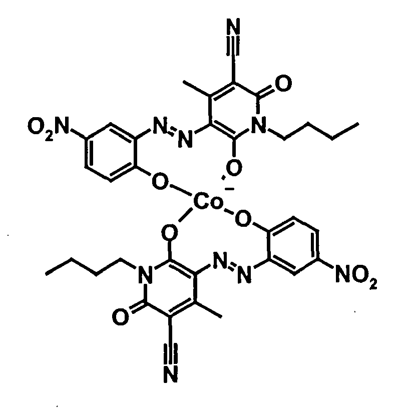

The present invention further relates to an optical layer comprising a dye compound of formula (I) as described above and to the use of said optical layer for optical data recording media. An optical layer according to the invention may also comprise a mixture of two or more, preferably of two dye compounds of formula (I) as defined above.

The styrylpyridinium-imine based dye compounds of formula (I) provide for particularily preferable properties when used in optical layers for optical data recording media according to the invention.

Further, the invention relates to a method for producing optical layers comprising the following steps
(a) providing a substrate
(b) dissolving a dye compound or a mixture of dye compounds of formula (I) in an organic solvent to form a solution,
(c) coating the solution (b) on the substrate (a);
(d) evaporating the solvent to form a dye layer.

Preferred substrates are polycarbonate (PC) or polymethylmethacrylate (PMMA).

Organic solvents are selected from C₁₋₈ alcohol , halogen substituted C₁₋₈ alcohols, C₁₋₈ ketone, C₁₋₈ ether, halogen substituted C₁₋₄ alkane, or amides.
Preferred C₁₋₈ alcohols or halogen substituted C₁₋₈ alcohols are for example methanol, ethanol, isopropanol, diacetone alcohol (DAA), 2,2,3,3-tetrafluoropropanol, trichloroethanol, 2-chloroethanol, octafluoropentanol or hexafluorobutanol.

Preferred C₁₋₈ ketones are for example acetone, methylisobutylketone, methylethylketone, or 3-hydroxy-3-methyl-2-butanone.

Preferred halogen substituted C₁₋₄ alkanes are for example chloroform, dichloromethane or 1-chlorobutane.
Preferred amides are for example dimethylformamide or dimethylacetamide.

The optical layer (dye layer) obtained preferably has a thickness from 70 to 250 nm.

In a preferred aspect, the present invention provides for an optical layer suitable for high-density recording material, e.g. of the WORM disc format, in a laser wavelength range of from 350-500nm, preferably around 405 nm.
The dye compounds of formula (I) possess the required optical characteristics (such as high absortivity and high recording sensitivity for example), an excellent solubility in organic solvents, an excellent light stability and a decomposition temperature of 250-300°C.

### Preparation of styrylpyridinium-imine based type dyes according to the invention

The styrylpyridinium-imine based dye compounds of formula (I) are obtained as described below: methylpyridine (A) is alkylated using an alkylating agent in an inert solvent providing compound (B). By reacting the methyl group of (B), in presence of organic or inorganic base, with the aldehyde group of (C) in a polar solvent, compound (D) is obtained. Further reaction of amino group of compound (D) with aldehyde moiety of compound (E) in a polar solvent in presence of organic or inorganic acid, leads to the compound (F). Eventual anion exchange on (F) is performed using the corresponding anion in an inert solvent under reflux conditions, providing the final dye of structure (I). 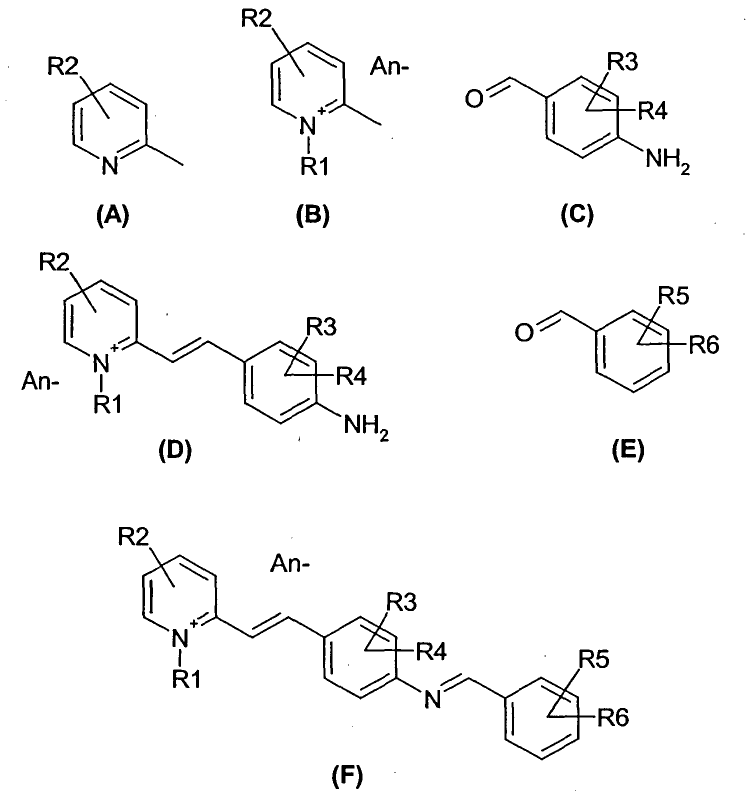 wherein R₁ to R₆ and An- are defined as above.

The process for the preparation of dyes of formula (I) can be described by the following steps:
(a) An alkylation reaction of (A) to form the pyridinium intermediate (B).
(b) A condensation reaction between (B) and (C) in presence of inorganic or organic base to form the compound (D).
(c) A condensation reaction between the compound (D) and the (E) in presence of inorganic or organic acid, leading to the compound (F).
(d) An anion exchange on compound (F) using an inert solvent and a suitable counter-ion to provide the final dye of structure (I)

The alkylation reaction of (A) to form the pyridinium is performed using a slight excess of an alkylating agent in an inert solvent (step a)). The preferred solvent for step a) is selected from cetones (acetone, methylethylcetone), halogenated solvents (dichloromethane, dichloroethane), dimethylformamide (DMF), N-methylpyrolidone (NMP).

The preferred solvent for the step (b) are selected from the group consisting of cetones (acetone, methylethylcetone), halogenated solvents (dichloromethane, dichloroethane), alcohols (methanol, ethanol), dimethylformamide (DMF), N-methylpyrolidone (NMP). The preferred bases used in the step (b) are selected from the group consisting of cyclic amines (picoline, pyridine, piperidine).

The preferred solvents used in the condensation reaction (step (c)) are selected from the group consisting of cetones (acetone, methylethylcetone), halogenated solvents (dichloromethane, dichloroethane), alcohols (methanol, ethanol), dimethylformamide (DMF), N-methylpyrolidone (NMP). The preferred acid used in the step (c) is acetic acid.

The preferred solvents used in the ion exchnage (step (d)) are selected from the group consisting of cetones (acetone, methylethylcetone), halogenated solvents (dichloromethane, dichloroethane), alcohols (methanol, ethanol), dimethylformamide (DMF), N-methylpyrolidone (NMP).

Most preferred solvents are methylethylcetone, dichloromethane, ethanol or dimethylformamide (DMF).
The most preferred acid is the organic acetic acid. The preferred base is piperidine.
The most preferred solvents for step (d) are methylethylcetone or ethanol.

### Preparation of high density optical data recording medium

The preparation of a high density optical data recording medium / a high density optical disc conventionally comprises the following steps:
(a) providing a first substrate
(b) dissolving the dye in an organic solvent to form a solution,
(c) coating the first solution on the first substrate;
(d) drying the solution to form a dye layer and
(e) disposing a reflection layer on the dye layer and
(f) disposing a second substrate on the reflection layer

In step (f), preferably a second substrate is bonded with the first substrate to form the high-density optical disc recording medium. Conventional techniques for bonding are printing, glueing or melting.

### EXAMPLES

All styrylpyridinium-imine based dye compounds were prepared using standard procedures known in the art, using reactions as described above, involving the alkylation of the appropriate 2-methylpyridine with a slight excess of alkylating agent in an inert solvent under reflux conditions. The obtained pyridinium is condensed to the appropriate 4-aminobenzaldehyde in an inert solvent in presence of organic base to form the corresponding styryl intermediate. The amino group of the styryl is then reacted with the suitable benzaldehyde derivative in a polar solvent in presence of organic acid. Ion exchange on the obtained styryl-imine compound is performed in a non-reactive solvent under reflux conditions in presence of the appropriate anion, providing the dyes of formula (I).

In the following examples "part" is always part by weight unless indicated otherwise.

### Example 1

a) 10 parts of 2-methylpyridine and 1 part of methyl iodide are stirred in 50 parts of dichloromethane at 40°C for 12 hours. Then the mixture is cooled to 25°C, filtered and washed with dichloromethane. The slightly yellow presscake is dried and the final pyridinium is obtained with 98% yield.
b) 10 parts of N-methyl-2-methylpyridinium and 5.2 parts of 4-aminobenzaldehyde are mixed together in 50 parts of dichloromethane in presence of 3.6 parts of piperidine and stirred at 40°C for 12 hours. After filtration at 25°C, washing with 20 parts of dichloromethane and drying, the desired styryl iodide salt is obtained in 95% yield as a reddish yellow powder.
c) 10 parts of previously obtained styryl are mixed with 4.5 parts of piperonal in 50 parts of ethanol and a catalytic amount of acetic acid. The whole mixture is heated to reflux and stirred for 12 hours. Reaction mixture is then cooled to 25°C, filtered and washed with 20 parts of ethanol and 2à parts of water. The brownish orange presscake is then dried and the following styrylpyridinium-imine based dye is obtained in 90% yield: 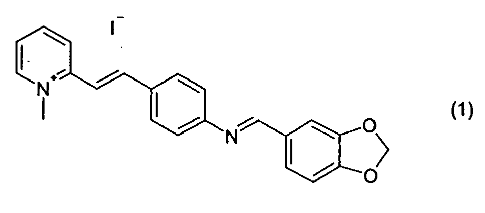 UV-Vis (MeOH) λₘₐₓ: 445 nm; ε (λₘₐₓ): 66 l.g⁻¹.cm⁻¹; DSC (decomp.) : 245°C; MS (positive mode): 343 (M⁺), 344 ((M+1)⁺)

### Examples 2-5

The following compounds are synthesized according to the procedures described for example 1: 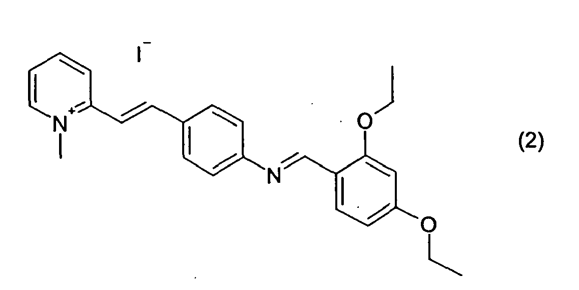 UV-Vis (MeOH) λₘₐₓ: 385 nm; ε (λₘₐₓ): 72 l.g⁻¹.cm⁻¹; DSC (decomp.) : 239°C; MS (positive mode): 374 (M⁺), 375 ((M+1)⁺) 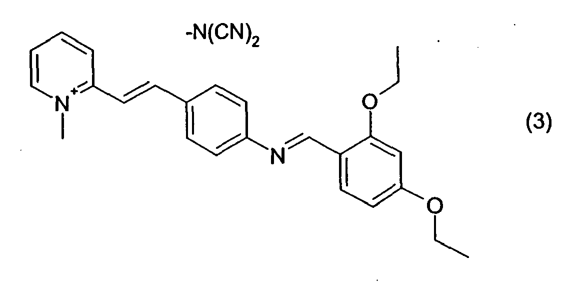 UV-Vis (MeOH) λₘₐₓ: 386 nm; ε (λₘₐₓ): 62 l.g⁻¹.cm⁻¹; DSC (decomp.) : 246°C; MS (positive mode): 374 (M⁺), 375 ((M+1)⁺) 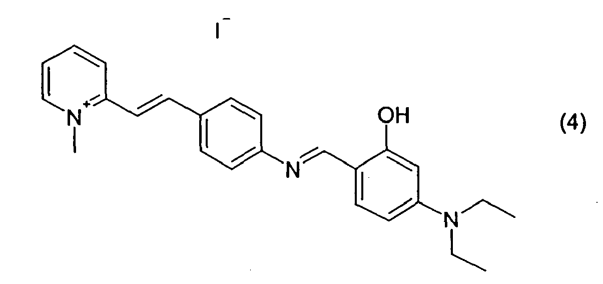 UV-Vis (CH₂CL₂) λₘₐₓ: 442 nm; ε (λₘₐₓ): 82 l.g⁻¹.cm⁻¹ ; DSC (decomp.) : 248°C; MS (positive mode): 386 (M⁺), 387 ((M+1)⁺) 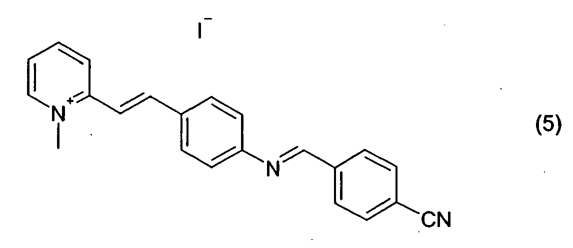 UV-Vis (MeOH) λₘₐₓ: 387 nm; ε (λₘₐₓ): 75 l.g⁻¹.cm⁻¹; DSC (decomp.) : 254°C; MS (positive mode): 324 (M⁺), 325 ((M+1)⁺)

### Example 6

### Counter-ion exchange

5 parts of the iodide styryl-imine dye of example 1 and 9.5 parts of an azo cobalt complex (as represented in the following final dye combination) are suspended into 25 parts of ethanol. The mixture is stirred for 5 hours at reflux. After cooling at 25°C, the suspension is filtered, washed with 10 parts of ethanol and 10 parts of water. After drying, the final dye is obtained with 94% yield as brownish orange powder. 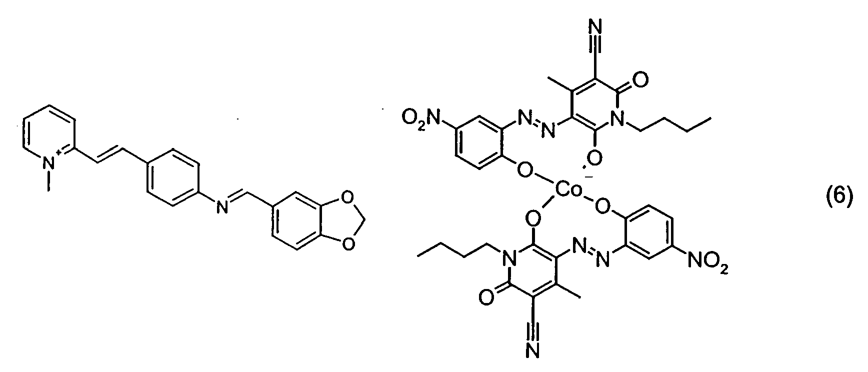 UV-Vis (MeOH) λₘₐₓ: 480 nm; ε (λₘₐₓ): 61 l.g⁻¹.cm⁻¹; DSC (decomp.) : 285°C; MS (positive mode): 343 (M⁺), 344 ((M+1)⁺)

### Example 7

### Counter-ion exchange

The procedure of example 6 was repeated starting with the iodide styryl-imine dye of example 5: 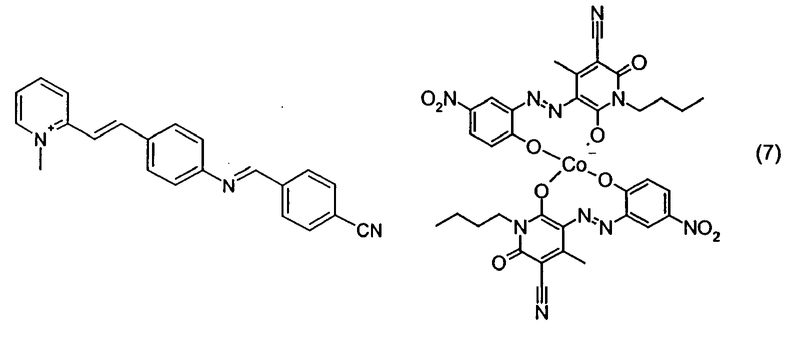 UV-Vis (CH₂Cl₂) λₘₐₓ: 335 nm; ε (λₘₐₓ): 38 l.g⁻¹.cm⁻¹; DSC (decomp.) = 280°C; MS (positive mode): 324 (M⁺), 325 ((M+1)⁺)

### Application Example

The optical and thermal properties of the styrylpyridinium-imine based dye compounds were studied. The dyes show high absorption at the desired wavelengths. In addition, the shape of the absorption spectra, that still remains critical to the disc reflectivity and formation of clean mark edges, are composed of one major band, comprised in a range of from 350 to 500 nm, preferably of from 350 to 450 nm.
More precisely, n values of the refractive index were evaluated between 1.0 and 2.7. Light stabilities were found comparable to commercial dyes which usually are stabilised with quenchers for the use in optical data recording.
Sharp threshold of thermal decomposition within the required temperature range characterizes the new styrylpyridinium-imine based dyes which are assumed to be desirable for the application in optical layers for optical data recording.
As a conclusion, the styrylpyridinium-imine based dye compounds are within the specifications which are primarily required by the industry for the use of dyes in optical data recording, in particular in the next-generation optical data recording media in the blue laser range.

## Claims

1. A dye compound of formula (I) 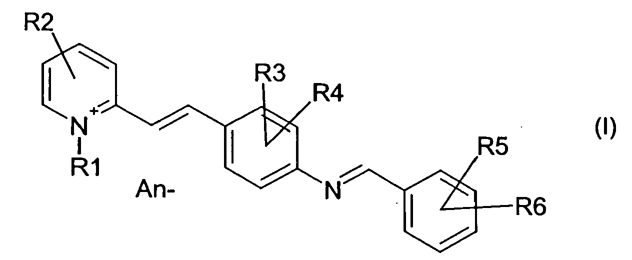 wherein
R₁ represents C₁₋₈ alkyl wherein the alkyl can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl or C₆₋₁₂ aryl;
CX₃ where X can be chlorine, fluorine, bromine;
R₂ hydrogen, cyano (-CN), halogen, nitro (NO₂), hydroxy, C₁₋₈ alkoxy (-OR) wherein the alkyl (R) can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl;
C₁₋₈ alkyl, wherein the alkyl can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl or C₆₋₁₂ aryl;
CX₃ where X can be chlorine, fluorine, bromine;
R₃ to R₆ independently of one another, represent hydrogen or cyano (-CN), halogen, nitro (NO₂), hydroxy, C₁₋₈ alkoxy (-OR) wherein the alkyl (R) can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl;
C₁₋₈ alkyl, wherein the alkyl can be unsubstituted or substituted by C₁₋₈ alkyl, hydroxy (-OH), by C₆₋₁₂ aryl or by -NR₇R₈ in which R₇ and R₈ are independently hydrogen, C₁₋₈ alkyl or C₆₋₁₂ aryl;
CX₃ where X can be chlorine, fluorine, bromine;
R₅ and R₆ together may also represent a heterocyclic moiety linked selected from dioxyalkyl O-(CH₂)ₙ-O, with n being 1 to 4 or NR₉-CO-NR₁₀ wherein R₉ and R₁₀ are C₁₋₁₂ alkyl;
An- represents an anion counter-part selected from inorganic anions such as iodine, fluorine, bromine, perchlorate, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.
An⁻ can also be an anionic azo metal complex based on cobalt metal.

2. A dye compound of formula (I) according to claim 1 wherein
R₁ represents C₁₋₄ alkyl wherein the alkyl can be unsubstituted or substituted by C₁₋₈ alkyl, hydroxy (-OH), by -NR₇R₈ in which R₇ and R₈ are independently hydrogen, C₁₋₈ alkyl;
CX₃ where X can be chlorine, fluorine, bromine;
R₂ hydrogen, cyano (-CN), halogen, nitro (NO₂), C₁₋₈ alkyl, wherein the alkyl can be unsubstituted or substituted by C₁₋₈ alkyl, hydroxy (-OH), by -NR₇R₈ in which R₇ and R₈ are independently hydrogen, C₁₋₈ alkyl CX₃ where X can be chlorine, fluorine, bromine;
R₃ to R₆ independently of one another, represent hydrogen or cyano (-CN), halogen, nitro (NO₂), hydroxy, C₁₋₈ alkoxy (-OR) wherein the alkyl (R) can be unsubstituted or substituted by C₁₋₈ alkyl, hydroxy (-OH), or by -NR₇R₈ in which R₇ and R₈ are independently hydrogen, C₁₋₈ alkyl;
C₁₋₈ alkyl, wherein the alkyl can be unsubstituted or substituted by C₁₋₈ alkyl, hydroxy (-OH), or by -NR₇R₈ in which R₇ and R₈ are independently hydrogen, C₁₋₈ alkyl;
CX₃ where X can be chlorine, fluorine, bromine;
R₅ and R₆ together may also represent a heterocyclic moiety selected from dioxyalkyl O-(CH₂)n-O, with n being 1 to 2 or NR₉-CO-NR₁₀ wherein R₉ and R₁₀ are C₁₋₆ alkyl;
An- represents an anion counter-part selected from inorganic anions such as iodine, perchlorate, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.
An⁻ can also be an anionic azo metal complex based on cobalt metal.

3. A dye compound of formula (I) according to claim 1 wherein
R₁ represents C₁₋₄ alkyl wherein the alkyl can be unsubstituted or substituted by C₁₋₄ alkyl;
R₂ hydrogen, cyano (-CN), halogen, nitro (NO₂), C₁₋₈ alkyl;
R₃ to R₆ independently of one another, represent hydrogen or cyano (-CN), halogen, nitro (NO₂), hydroxy, C₁₋₄ alkoxy (-OR) wherein the alkyl (R) can be unsubstituted or substituted by C₁₋₄ alkyl, hydroxy (-OH); C₁₋₄ alkyl, wherein the alkyl can be unsubstituted or substituted by C₁₋₈ alkyl, hydroxy (-OH);
CX₃ where X can be chlorine, fluorine, bromine;
R₅ and R₆ together may also represent a heterocyclic moiety selected from dioxyalkyl O-(CH₂)n-O, with n being 1 to 2 or NR₉-CO-NR₁₀ wherein R₉ and R₁₀ are C₁₋₂ alkyl;
An- represents an anion counter-part selected from inorganic anions such as iodine, perchlorate, hexafluoroantimonate, hexafluorophosphate, tetrafluoroborate, tetraphenylborate or organic anions such as dicyanoamide (N(CN)₂) or trifluoromethanesulfonimide (N(SO₂CF₃)₂.
An⁻ can also be an anionic azo metal complex based on cobalt metal.

4. A dye compound of formula (I) according to claim 1 wherein
R₁ is methyl;
R₂ is hydrogen;
R₃ to R₄ represent hydrogen;
R₅ and R₆ together represent a heterocyclic moiety -O-CH₂-O-;
An⁻ represents an anionic azo cobalt complex of the following formula

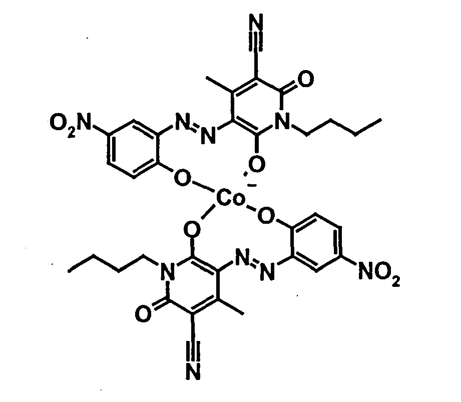

5. An optical layer comprising at least one dye compound according to formula (I) as defined in claims 1 to 4 or a mixture of at least two dye compounds according to formula (I) as defined in claims 1 to 4.

6. A method for producing an optical layer according to claim 5, comprising the following steps
(a) providing a substrate
(b) dissolving a dye compound or a mixture of dye compounds of formula (I), as defined in claims 1 to 4 in an organic solvent to form a solution,
(c) coating the solution (b) on the substrate (a);
(d) evaporating the solvent to form a dye layer.

7. A method according to claim 6, wherein the substrate is polycarbonate (PC) or polymethylmethacrylate (PMMA).

8. A method according to claim 6, wherein the organic solvent is selected from C₁₋₈ alcohol, halogen substituted C₁₋₈ alcohols, C₁₋₈ ketone, C₁₋₈ ether, halogen substituted C₁₋₄ alkane, or amides.

9. A method according to claim 6, wherein the C₁₋₈ alcohols or halogen substituted C₁₋₈ alcohols are selected from methanol, ethanol, isopropanol, diacetone alcohol (DAA), 2,2,3,3-tetrafluoropropanol, trichloroethanol, 2-chloroethanol, octafluoropentanol or hexafluorobutanol;
the C₁₋₈ ketones are selected from acetone, methylisobutylketone, methylethylketone, or 3-hydroxy-3-methyl-2-butanone;
the halogen substituted C₁₋₄ alkanes are selected from chloroform, dichloromethane or 1-chlorobutane; and
the amides are selected from dimethylformamide or dimethylacetamide.

10. An optical recording medium comprising an optical layer according to claim 5.
